# FASCICULE DE BREVET EUROPEEN

(11) **EP 4 507 929 B1**
(45) Date de publication et mention de la délivrance du brevet: **10.12.2025**
(21) Numéro de dépôt: 23713708.8
(22) Date de dépôt: 08.03.2023
(51) Int. Cl.: B60R 21/34, B62D 25/10, B62D 25/12, B62D 27/02

(54) **DOUBLURE DE CAPOT POUR VÉHICULE AUTOMOBILE**
HAUBENINNENVERKLEIDUNG FÜR EIN KRAFTFAHRZEUG
HOOD INNER PANEL FOR A MOTOR VEHICLE

(30) Priorité: 14.04.2022 FR 2203438
(43) Date de publication de la demande: 19.02.2025
(73) Titulaire: Stellantis Auto SAS, 78300 Poissy (FR)
(72) Inventeur: PERON, Rodolphe, 95220 HERBLAY SUR SEINE (FR); GOURVENNEC, Thibault, 91210 DRAVEIL (FR)
(74) Mandataire: BCIP
(86) Numéro de dépôt international: PCT/FR2023/050306
(87) Numéro de publication internationale: WO 2023/198969

(56) Documents cités:
- DE-A1- 102005 015 057
- US-A1- 2004 021 342

## Description

La présente invention revendique la priorité de la demande française 2203438 déposée le 14 avril 2022.

Le contexte technique de la présente invention est celui des capots de véhicule automobile. Plus particulièrement, l'invention a trait à une doublure de capot pour véhicule automobile et présentant de meilleures performances en termes de sécurité piéton.

Dans l'état de la technique, on connait des doublures de capot formant une structure rigide sur lesquelles sont fixées les capots de véhicules automobiles afin de leur donner la forme attendue, en fonction de chaque véhicule automobile. Les doublures de capot connues forment ainsi des structures rigides qui permettent de garantir une bonne tenue du capot et une bonne stabilité.

Cependant, lors d'un choc avant avec un piéton, il arrive que le piéton percuté s'effondre brutalement sur le capot, sa tête percutant alors ledit capot. Afin de réduire les blessures infligées au piéton dans un tel choc, il convient d'autoriser une relative souplesse au niveau du capot afin de permettre une compression du capot sous l'effet de sa percussion par le piéton. Ainsi, de manière connue, certaines zones du capot et de la doublure de capot sont aménagées pour réduire localement la rigidité de la doublure de capot et d'autoriser une plus grande souplesse du capot.

Il en résulte la recherche d'un compromis, difficile à trouver, entre le besoin de rigidité de la doublure de capot nécessaire à la bonne tenue du capot et le besoin de souplesse pour réduire les blessures infligées au piéton en cas de choc avant.

En particulier, une zone arrière de fixation de la doublure de capot et permettant d'attacher le capot à ladite doublure de capot fait l'objet de contraintes contradictoires : il s'agit d'une zone dans laquelle la doublure de capot doit être particulièrement rigide afin de permettre de fixer solidement le capot dessus et d'éviter des phénomènes non désirable de respiration du capot lors du roulage du véhicule automobile. A contrario, il s'agit aussi d'une zone dans laquelle la tête d'un piéton percuté par le véhicule automobile est susceptible de toucher le capot. Aussi, et tel qu'évoqué précédemment, il est attendu d'autoriser à proximité de cette zone une relative souplesse au capot afin de réduire la gravité des blessures imposées au piétons suite à ce choc.

Afin de résoudre ces injonctions contradictoires, on connait le document DE10038812 A1 qui décrit une doublure de capot présentant un certain nombre d'ouvertures situées au niveau d'une partie arrière du capot, proximale d'un habitacle du véhicule automobile, et qui permettent d'évacuer l'eau de pluie, d'autoriser une ventilation, par exemple du compartiment moteur, et de réduire le poids de la doublure de capot. Ces ouvertures ne sont pas prévues pour apporter une souplesse au capot au niveau de la zone arrière de la doublure de capot, si bien que la problématique du choc piéton contre le capot demeure ici entière. DE 10 2005 015057 A1 divulgue une doublure de capot pour véhicule automobile, la doublure de capot comportant une zone arrière de fixation d'un capot sur la doublure de capot, la zone arrière comportant pistes de collage du capot sur la doublure de capot, chaque au moins une piste de collage formant une poutre s'étendant selon un axe transversal (Y) de la doublure de capot et présentant une face supérieure d'appui contre le capot.

La présente invention a pour objet de proposer une nouvelle doublure de capot afin de répondre au moins en grande partie aux problèmes précédents et de conduire en outre à d'autres avantages.

Un autre but de l'invention est de réduire les risques de blessure infligées par le capot à un piéton renversé par le véhicule automobile et impactant ledit capot.

Un autre but de l'invention est d'améliorer une note de sécurité du véhicule automobile, face à un choc avant avec un piéton, au niveau de la zone arrière du capot.

Selon un premier aspect de l'invention, on atteint au moins l'un des objectifs précités avec une doublure de capot pour véhicule automobile selon la revendication 1.

Dans le contexte de la présente invention, l'axe longitudinal, l'axe latéral et l'axe vertical sont définis relativement au véhicule automobile sur lequel la doublure de capot conforme au premier aspect de l'invention est destinée à être montée. Plus particulièrement, l'axe transversal s'entend comme une direction prise entre un côté latéral du véhicule automobile et un côté latéral opposé dudit véhicule automobile. En d'autres termes, l'axe transversal s'entend selon une direction qui s'étend depuis un côté passager du véhicule automobile vers un côté conducteur dudit véhicule automobile, ou réciproquement. Les adjectifs latéraux, intérieur et extérieur font référence à un tel axe transversal. En outre, l'axe longitudinal s'étend comme étant pris le long d'une direction qui s'étend d'avant en arrière ou d'arrière en avant du véhicule automobile. L'axe longitudinal est perpendiculaire à l'axe transversal. Les adjectifs frontaux, avant et arrière font référence à cet axe longitudinal. Enfin, l'axe vertical s'entend comme étant pris le long d'un axe qui s'étend depuis les roues du véhicule automobile et vers le toit dudit véhicule automobile, ou inversement, l'axe vertical étant simultanément perpendiculaire à l'axe transversal et à l'axe longitudinale. Les adjectifs dessus et dessous, ou inférieur et supérieur font référence à cet axe vertical.

La doublure de capot forme une structure rigide destinée à collaborer avec le capot pour former un ensemble de capot. Dans un tel ensemble de capot, le capot est fixé solidairement à la doublure de capot par l'intermédiaire, d'une part, d'une pluralité de points de fixation périphériques, tes que par exemple par sertissage, et, d'autre part, par collage au niveau des pistes de collage de la doublure de capot.

Dans le contexte de l'invention, la zone arrière de la doublure de capot est située à proximité d'un parebrise du véhicule automobile sur lequel la doublure de capot est destinée à être montée. En outre, chaque piste de collage forme une poutre qui apporte la rigidité attendue à la doublure de capot, au niveau de la zone arrière. Les pistes de collage forment des zones de contact entre le capot et la doublure de capot. Dans l'ensemble de capot, le capot est collé ou soudé à la doublure de capot au niveau de ces pistes de collage, afin d'éviter que ledit capot ne soit mobile par rapport à la doublure de capot et entre les points de fixation périphérique.

De manière particulièrement astucieuse, la doublure de capot comporte plusieurs pistes de collage qui sont séparées les unes des autres par une amorce de déformation. Chaque amorce de déformation est configurée pour, en cas de choc sur le capot, lors d'un choc piéton notamment, localiser des contraintes mécaniques au niveau de chaque amorce de déformation afin de, in fine, autoriser une déformation locale de la zone arrière de la doublure de capot au niveau de chaque amorce de déformation. Ainsi, l'au moins une amorce de déformation autorise une relative souplesse de la zone arrière, au niveau de chaque amorce de déformation, relativement aux pistes de collage de ladite zone arrière. Ainsi, en cas de choc piéton, chaque amorce de déformation va permettre un enfoncement de la zone arrière qui limitera l'impact du choc au niveau du piéton.

Ainsi, de manière particulièrement astucieuse, la doublure de capot conforme au premier aspect de l'invention permet de concilier efficacement à la fois le besoin de rigidité de la zone arrière afin de pouvoir fixer solidairement le capot et limiter son mouvement par rapport à la doublure de capot, et le besoin de souplesse au regard d'un enfoncement du capot et de la doublure de capot lors d'un choc avant avec un piéton par exemple.

La doublure de capot conforme au premier aspect de l'invention comprend avantageusement au moins un des perfectionnements ci-dessous, les caractéristiques techniques formant ces perfectionnements pouvant être prises seules ou en combinaison :
- la zone arrière comporte préférentiellement trois pistes de collage et deux amorces de déformation. Ainsi, en cas de déformation de la zone arrière, celle-ci aura tendance à se déformer autour de trois segments qui s'inclineront les uns par rapport aux autres, autour de chaque amorce de déformation correspondante. Cette configuration permet ainsi de proposer une meilleure déformation de la zone arrière de la doublure de capot, en évitant notamment de former un angle aigu entre chaque segments déformés de la zone arrière. En d'autres termes, la présence de trois pistes de collage séparées deux à deux par une amorce de déformation permet au contraire de favoriser une déformation de chaque segment déformé de la zone arrière conservant un angle obtus entre eux, pris au niveau de l'amorce de déformation correspondante ;
- chaque piste de collage forme un segment rectiligne qui s'étend selon l'axe transversal. Plus particulièrement, les pistes de collage sont toutes alignées les unes aux autres, relativement à l'axe transversal. En d'autres termes, les segments rectilignes le long desquels s'étendent les pistes de collage sont préférentiellement colinéaires ;
- les pistes de collage présentent toutes des dimensions analogues, voire identiques. Préférentiellement, les pistes de collage sont toutes identiques. En particulier les face supérieures d'appui sont avantageusement toutes coplanaires ;
- les pistes de collage sont régulièrement réparties relativement à l'axe transversal de la doublure de capot ;
- chaque amorce de déformation prend la forme d'un amincissement local de matière, mesuré selon l'axe vertical et comparativement à une épaisseur de matière mesurée au niveau des pistes de collage, relativement à l'axe vertical. L'amincissement de matière permet ainsi de réduire localement la rigidité de la piste de collage, au niveau de l'amorce de déformation, et permet ainsi de définir une zone de fragilité conduisant à sa déformation en cas de choc. Dans cette première variante de réalisation, l'amorce de déformation est ménagée par une variation d'épaisseur de la piste de collage au niveau de ladite amorce de déformation. En revanche, une géométrie générale de l'amorce de déformation reste comparable, voire identique, à celle des pistes de collage ;
- selon une variante de réalisation, chaque amorce de déformation comporte un rabat incliné s'étendant depuis une terminaison transversale de chaque piste de collage encadrant transversalement ladite amorce et en direction d'une zone de pliure de l'amorce de déformation. En d'autres termes, la zone de pliure de l'amorce de déformation est encadrée relativement à l'axe transversal par deux rabats inclinés, chaque rabat incliné s'étendant depuis la face supérieure d'appui de chaque piste de collage adjacente et en direction de ladite zone de pliure. De manière avantageuse, chaque rabat incliné prend la forme d'un embouti de chaque terminaison transversale des pistes de collage encadrant transversalement ladite amorce de déformation, l'embouti formant le rabat incliné. Dans cette deuxième variante de réalisation, c'est plutôt la forme de la zone arrière qui est modifiée localement, au niveau des amorces de déformation, afin de permettre une localisation et une concentration des contraintes transmises à la doublure de capot en cas de choc. Ainsi, dans cette variante de réalisation, la structure en poutre des pistes de collage est interrompue par les amorces de déformation afin de conférer davantage de souplesse aux amorces de déformation relativement aux pistes de collage. Dans cette configuration, chaque amorce de déformation comporte une zone de pliure qui permet, en cas de choc, de réaliser une pliure de la zone arrière au niveau justement de chacune de ces zones de pliure. Cette configuration avantageuse permet ainsi de déformer la zone arrière selon des segments correspondants aux pistes de collage, chaque segment pivotant par rapport à un autre segment directement adjacent, et relativement à la zone de pliure les séparant ;
- la zone de pliure de chaque amorce de déformation comporte un méplat s'étendant entre chaque rabat incliné encadrant transversalement ladite amorce de déformation. Le méplat de chaque zone de pliure s'étend selon un axe longitudinal de la doublure de capot perpendiculaire à l'axe transversal. Ainsi, relativement à l'axe transversal, le méplat est délimité par des bords rectilignes qui s'étendent chacun parallèlement à l'axe longitudinal, chaque bord rectiligne formant une amorce de pliure de la zone de pliure. Cette configuration permet d'éviter à la fois l'apparition d'un pincement au niveau de l'amorce de déformation, et aussi l'apparition d'un point dur qui apporterait une rigidité additionnelle, non souhaitée ici. En effet, grâce à la présence du méplat, l'amorce de déformation se déforme par pliure autour simultanément de chaque bord rectiligne formant l'amorce de pliure de la zone de pliure. Afin de renforcer l'amorçage de la pliure de chaque zone de pliure, une épaisseur du méplat est inférieure à l'épaisseur des pistes de collage, chaque épaisseur étant prise relativement à l'axe vertical ;
- les bords rectilignes du méplat de chaque zone de pliure sont parallèles entre eux ;
- le méplat de chaque zone de pliure est parallèle à la face supérieure d'appui. Par suite, relativement à un axe vertical, le méplat de la zone de pliure de chaque amorce de déformation est situé en contrebas par rapport à la face supérieure d'appui des pistes de collage.
- une distance entre le méplat et la face supérieure d'appui est, relativement à l'axe vertical, compris entre 10 mm et 20 mm, préférentiellement égal à 15 mm ;
- relativement à l'axe transversal, une largeur du méplat de la zone de pliure de chaque amorce de déformation est comprise entre 10 mm et 20 mm ;
- la zone arrière de fixation présente une symétrique relativement à un plan longitudinal médian comportant l'axe longitudinal et l'axe vertical de la doublure de capot ;
- afin de garantir une surface de contact suffisante entre les pistes de collage de la doublure de capot et le capot associé, une superficie de chacune des pistes de collage, mesurée au niveau de la face supérieure d'appui de chacune desdites pistes de collage, est comprise entre 80 et 100 cm²
- la doublure de capot est formé d'une tôle d'épaisseur comprise entre 0,5 mm et 1 mm, préférentiellement égale à 0,65 mm ;
- la doublure de capot est préférentiellement faite d'un matériau métallique, tel que par exemple de l'acier ;
Selon un deuxième aspect de l'invention, il est proposé un véhicule automobile comportant un compartiment moteur recouvert d'un ensemble de capot comportant une doublure de capot conforme au premier aspect de l'invention ou selon l'un quelconque de ses perfectionnements et un capot solidaire de la doublure de capot au moins au travers d'un collage dudit capot sur les pistes de collage de ladite doublure de capot.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue tridimensionnelle d'un exemple de réalisation d'une doublure de capot conforme au premier aspect de l'invention ;
[Fig.2] illustre une vue tridimensionnelle de la zone arrière de la doublure de capot illustrée sur la FIGURE 1 ;
[Fig.3] illustre une vue schématique de profil d'un véhicule automobile conforme au deuxième aspect de l'invention.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

Dans les figures et les paragraphes qui suivent, on définit l'axe longitudinal X, l'axe latéral et l'axe vertical Z relativement au véhicule automobile 2 sur lequel la doublure de capot 1 conforme au premier aspect de l'invention est destinée à être montée. Plus particulièrement, l'axe transversal Y s'entend comme une direction prise entre un côté latéral du véhicule automobile 2 et un côté latéral opposé dudit véhicule automobile 2. En d'autres termes, l'axe transversal Y s'entend selon une direction qui s'étend depuis un côté passager du véhicule automobile 2 vers un côté conducteur dudit véhicule automobile 2, ou réciproquement. Les adjectifs latéraux, intérieur et extérieur font référence à un tel axe transversal Y. En outre, l'axe longitudinal X s'étend comme étant pris le long d'une direction qui s'étend d'avant en arrière ou d'arrière en avant du véhicule automobile 2. L'axe longitudinal X est perpendiculaire à l'axe transversal Y. Les adjectifs frontaux, avant et arrière font référence à cet axe longitudinal X. Enfin, l'axe vertical Z s'entend comme étant pris le long d'un axe qui s'étend depuis les roues du véhicule automobile 2 et vers le toit dudit véhicule automobile 2, ou inversement, l'axe vertical Z étant simultanément perpendiculaire à l'axe transversal Y et à l'axe longitudinal Xe. Les adjectifs dessus et dessous, ou inférieur et supérieur font référence à cet axe vertical Z.

Dans les FIGURES et paragraphes qui suivent, la doublure de capot 1 conforme au premier aspect de l'invention est représentée relativement à ce système de repérage spatial.

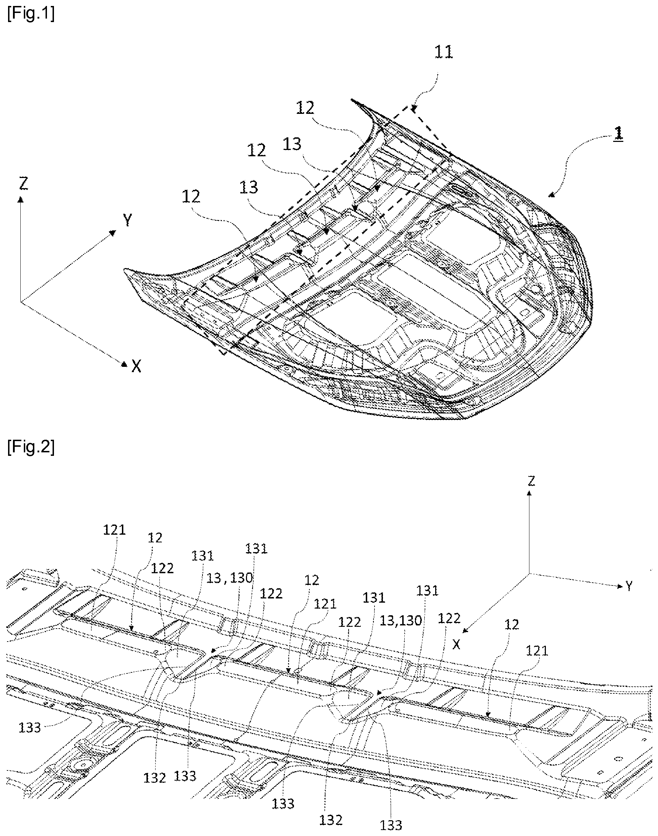

En référence aux FIGURES 1 et 2, l'invention conforme à son premier aspect concerne une doublure de capot 1 pour véhicule automobile 2, la doublure de capot 1 comportant une zone arrière 11 de fixation d'un capot 30 sur la doublure de capot 1, la zone arrière 11 comportant :
- au moins deux pistes de collage 12 du capot 30 sur la doublure de capot 1, chaque au moins une piste de collage 12 formant une poutre s'étendant selon un axe transversal Y de la doublure de capot 1 et présentant une face supérieure d'appui 121 contre le capot 30, et
- au moins une amorce de déformation 13 de la zone arrière 11, chaque amorce de déformation 13 étant logée entre deux pistes de collage 12 adjacentes, relativement à l'axe transversal Y, chaque amorce de déformation 13 présentant une souplesse supérieure à celle des pistes de collage 12 au regard d'un effort de compression orienté selon un axe vertical Z de la doublure de capot 1.

Dans l'exemple de réalisation illustré sur les FIGURES 1 et 2, la zone arrière 11 de la doublure de capot 1 conforme au premier aspect de l'invention comporte trois pistes de collage 12 et deux amorces de déformation 13, chaque amorce de déformation 13 étant située dans une position intermédiaire entre deux pistes de collage 12 adjacentes, relativement à l'axe transversal Y.

La zone arrière 11 de la doublure de capot 1 est destinée à être située du côté d'un parebrise du véhicule automobile 2. Dans le contexte de l'invention, cette zone est particulièrement pertinente car, dans le cas où un piéton serait percuté par le véhicule automobile 2, la zone arrière 11 correspond souvent à une zone d'impact de la tête du piéton. L'invention conforme à son premier aspect permet ainsi de fournir à cette zone arrière 11 une relative souplesse relativement à l'axe vertical Z afin d'autoriser son enfoncement lors d'un tel choc. Cet enfoncement est autorisé par la déformation prédéterminée par la géométrie de la zone arrière 11 et l'apport inventif des amorces de déformation 13 prévues entre les différentes pistes de collage 12.

La zone arrière 11 de fixation de la doublure de capot 1 conforme au premier aspect de l'invention présente une symétrique relativement à un plan longitudinal médian comportant l'axe longitudinal X et l'axe vertical Z.

Comme visible sur les FIGURES 1 et 2, les pistes de collage 12 forment chacune des portées prismatiques qui s'étendent en saillie selon l'axe vertical Z de la doublure de capot 1. Ainsi, les pistes de collage 12 forment ensemble une poutre qui confère de la rigidité à la zone arrière 11 de la doublure de capot 1, relativement à un effort de flexion orienté selon l'axe vertical Z. Au niveau d'une extrémité verticale, les pistes de collage 12 forment chacune une plateforme plane formant leurs faces supérieures d'appui 121 et contre lesquelles le capot 30 est destiné à être mis en appui et collé. En effet, les face supérieures d'appui sont destinées à être encollées avant mise en place et fixation du capot 30 sur la doublure de capot 1.

Les pistes de collage 12 s'étendent de manière rectiligne le long de l'axe transversal Y, de sorte que les faces supérieures d'appui 121 prennent chacune une forme globalement rectangulaire.

Au niveau de chacune de leurs terminaisons transversales 122, les pistes de collage 12 comportent un rabat incliné 131 formant un angle non nul par rapport aux faces supérieures d'appui 121. Un angle, mesuré entre une normale d'un rabat incliné 131 et une normale de la face supérieure d'appui 121 à partir de laquelle ledit rabat incliné 131 est formé, est avantageusement compris entre 200° et 280°.

Ainsi, deux pistes de collage 12 directement adjacentes sont séparées l'une de l'autre par deux rabats inclinés 131 qui se font face l'une de l'autre. La zone situées entre deux rabats inclinés 131 de deux pistes de collage 12 directement adjacentes est une amorce de déformation 13 de la zone arrière 11 de la doublure de capot 1.

Chaque amorce de déformation 13 est ainsi située en contre-bas des pistes de collage 12, relativement à l'axe vertical Z, de sorte que chacune des amorces de déformation 13 forme une interruption des pistes de collage 12.

Cette interruption des pistes de collage 12 permet de générer un effet inverse à celui conféré par la structure desdites pistes de collage 12. En d'autres termes, chaque amorce de déformation 13 apporte une souplesse à la zone arrière 11 de la doublure de capot 1. De manière astucieuse, cette souplesse est géographiquement limitée et contenue de manière très localisée à la zone de déformation. Consécutivement, cette géométrie particulière de la zone arrière 11 permet, au niveau des amorces de déformation 13, d'autoriser une déformation par flexion le long de l'axe vertical Z en cas de choc avec un piéton.

Ainsi, la zone arrière 11 de la doublure de capot 1 conforme au premier aspect de l'invention est à la fois rigide, au travers des pistes de collage 12, et relativement souple grâce à des points de moindre rigidité localisés au niveau des amorces de déformation 13.

Chaque amorce de déformation 13 est ainsi délimitée transversalement par deux rabats inclinés 131. La zone située entre les deux rabats inclinés 131 forme ainsi une zone de pliure 130 de l'amorce de déformation 13, qui permet à la zone arrière 11 de la doublure de capot 1 de se déformer autour de deux zones d'inflexion correspondant à ces zones de pliure 130, en cas de choc piéton par exemple. Ainsi, dans l'éventualité d'un tel choc, la zone arrière 11 subira une déformation en flexion au niveau de chaque zone de pliure 130, permettant à chaque piste de collage 12 de pivoter relativement les unes par rapport aux autres, par rapport à un axe de rotation orienté selon la zone de pliure 130, préférentiellement parallèle à l'axe longitudinal X. En d'autres termes, la zone de pliure 130 de chaque amorce de déformation 13 permet de localiser et concentrer des contraintes mécaniques transmises à la doublure de capot 1 en cas de choc, conduisant à une déformation facilitée de la zone arrière 11, et donc une réduction des blessures infligées au piéton victime du choc.

Afin de renforcer ce comportement de pliure au niveau des amorces de déformation 13, la zone de pliure 130 de chaque amorce de déformation 13 comporte un méplat 132 s'étendant entre chaque rabat incliné 131 encadrant transversalement ladite amorce de déformation 13. Une orientation du méplat 132 définit en quelques sorte un axe de pliure de la zone de pliure 130 et, finalement, un axe de rotation de la piste de collage 12 directement adjacente. Dans l'exemple de réalisation illustré sur les FIGURES 1 et 2, le méplat 132 de chaque zone de pliure 130 s'étend selon l'axe longitudinal X de la doublure de capot 1.

Relativement à l'axe transversal Y, le méplat 132 est délimité par des bords rectilignes 133 qui s'étendent chacun parallèlement à l'axe longitudinal X, chaque bord rectiligne 133 formant une amorce de pliure de la zone de pliure 130. Chaque bord rectiligne 133 du méplat 132 est formé à la base du rabat incliné 131 délimitant l'amorce de déformation 13 correspondante.

D'une manière générale, le méplat 132 a une forme générale rectangulaire, les bords rectilignes 133 du méplat 132 de chaque zone de pliure 130 étant parallèles entre eux. Les bords rectilignes 133 des méplats 132 de toutes les amorces de déformation 13 de la zone arrière 11 sont avantageusement tous parallèles entre eux.

Le méplat 132 de chaque zone de pliure 130 forme ainsi une face plane qui est parallèle à la face supérieure d'appui 121 des pistes de collage 12 adjacentes. Par suite, relativement à un axe vertical Z, le méplat 132 de la zone de pliure 130 de chaque amorce de déformation 13 est situé en contrebas par rapport à la face supérieure d'appui 121 des pistes de collage 12. Dans l'exemple de réalisation illustré sur les FIGURES 1 et 2, une distance entre le méplat 132 et la face supérieure d'appui 121 des pistes de collage 12 est, relativement à l'axe vertical Z, égal à 15 mm. En outre, relativement à l'axe transversal Y, une largeur du méplat 132 de la zone de pliure 130 de chaque amorce de déformation 13 est comprise entre 10 mm et 20 mm, mesuré entre ses bords rectilignes 133.

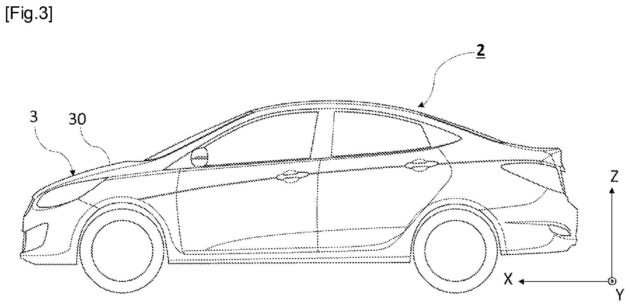

La FIGURE 3 illustre un véhicule automobile 2 comportant un compartiment moteur recouvert d'un ensemble de capot 30 3 comportant une doublure de capot 1 telle que décrite précédemment et un capot 30 solidaire de la doublure de capot 1 au moins au travers d'un collage dudit capot 30 sur les pistes de collage 12 de ladite doublure de capot 1.

En synthèse, l'invention concerne une doublure de capot 1 dont la zone arrière 11 est modifiée afin d'autoriser une déformation en flexion en cas de choc avant avec un piéton, afin de réduire l'impact du choc sur le capot 30. A cet effet, la zone arrière 11 de la doublure de capot 1 prévoit d'interrompre la piste de collage 12 généralement présente afin de former plusieurs pistes de collage 12 séparées les unes des autres par des amorces de déformation 13 locales qui, en cas de chocs, introduiront une souplesse en flexion bénéfique au piéton.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Doublure de capot (1) pour véhicule automobile (2), la doublure de capot (1) comportant une zone arrière (11) de fixation d'un capot (30) sur la doublure de capot (1), la zone arrière (11) comportant au moins deux pistes de collage (12) du capot (30) sur la doublure de capot (1), chaque au moins une piste de collage (12) formant une poutre s'étendant selon un axe transversal (Y) de la doublure de capot (1) et présentant une face supérieure d'appui (121) contre le capot (30), **caractérisé en ce que** la zone arrière (11) comporte au moins une amorce de déformation (13), chaque amorce de déformation (13) étant logée entre deux pistes de collage (12) adjacentes, relativement à l'axe transversal (Y), chaque amorce de déformation (13) présentant une souplesse supérieure à celle des pistes de collage (12) au regard d'un effort de compression orienté selon un axe vertical (Z) de la doublure de capot (1), chaque amorce de déformation (13) prenant la forme d'un amincissement local de matière, mesuré selon l'axe vertical (Z) et comparativement à une épaisseur de matière mesurée au niveau des pistes de collage (12), relativement à l'axe vertical (Z).

2. Doublure de capot (1) selon la revendication précédente, dans laquelle les pistes de collage (12) sont toutes alignées les unes aux autres, relativement à l'axe transversal (Y).

3. Doublure de capot (1) selon l'une quelconque des revendications 1 ou 2, dans laquelle chaque amorce de déformation (13) comporte un rabat incliné (131) s'étendant depuis une terminaison transversale (122) de chaque piste de collage (12) encadrant transversalement ladite amorce et en direction d'une zone de pliure (130) de l'amorce de déformation (13).

4. Doublure de capot (1) selon la revendication précédente, dans laquelle la zone de pliure (130) de chaque amorce de déformation (13) comporte un méplat (132) s'étendant entre chaque rabat incliné (131) encadrant transversalement ladite amorce de déformation (13).

5. Doublure de capot (1) selon la revendication précédente, dans laquelle, relativement à l'axe transversal (Y), le méplat (132) est délimité par des bords rectilignes (133) qui s'étendent chacun parallèlement à l'axe longitudinal (X), chaque bord rectiligne (133) formant une amorce de pliure de la zone de pliure (130).

6. Doublure de capot (1) selon la revendication précédente, dans laquelle les bords rectilignes (133) du méplat (132) de chaque zone de pliure (130) sont parallèles entre eux.

7. Doublure de capot (1) selon l'une quelconque des revendications 4 à 6, dans laquelle le méplat (132) de chaque zone de pliure (130) est parallèle à la face supérieure d'appui (121).

8. Doublure de capot (1) selon la revendication précédente, dans laquelle une distance entre le méplat (132) et la face supérieure d'appui (121) est, relativement à l'axe vertical (Z), compris entre 10 mm et 20 mm, préférentiellement égal à 15 mm.

9. Véhicule automobile (2) comportant un compartiment moteur recouvert d'un ensemble de capot (30) (3) comportant une doublure de capot (1) selon l'une quelconque des revendications précédentes et un capot (30) solidaire de la doublure de capot (1) au moins au travers d'un collage dudit capot (30) sur les pistes de collage (12) de ladite doublure de capot (1).

## Patentansprüche

1. MOTORHAUBENAUSKLEIDUNG (1) FÜR EIN KRAFTFAHRZEUG (2), WOBEI DIE MOTORHAUBENAUSKLEIDUNG (1) EINEN HINTEREN BEREICH (11) ZUR BEFESTIGUNG EINER MOTORHAUBE (30) AN DER MOTORHAUBENAUSKLEIDUNG (1) AUFWEIST, WOBEI DER HINTERE BEREICH (11) MINDESTENS ZWEI KLEBESTRECKEN (12) DER MOTORHAUBE (30) AN DER MOTORHAUBENAUSKLEIDUNG (1) AUFWEIST, WOBEI JEDE MINDESTENS EINE KLEBESTRECKE (12) EINEN BALKEN BILDET, DER SICH IN EINER QUERACHSE (Y) DER MOTORHAUBE ERSTRECKT ABDECKFUTTER (1) MIT EINER OBERSEITE ZUR ANLAGE (121) AN DER ABDECKUNG (30), **DADURCH GEKENNZEICHNET, DASS** DER HINTERE BEREICH (11) MINDESTENS EINEN VERFORMUNGSANSATZ (13) AUFWEIST, WOBEI JEDER VERFORMUNGSANSATZ (13) ZWISCHEN ZWEI BEZÜGLICH DER QUERACHSE (Y) BENACHBARTEN KLEBESTRECKEN (12) AUFGENOMMEN IST, WOBEI JEDER VERFORMUNGSANSATZ (13) EINE GRÖSSERE FLEXIBILITÄT ALS DIE KLEBESTRECKEN AUFWEIST (12) IM HINBLICK AUF EINE IN EINER VERTIKALEN ACHSE (Z) DER HAUBENAUSKLEIDUNG (1) AUSGERICHTETE DRUCKKRAFT NIMMT JEDER VERFORMUNGSANSATZ (13) DIE FORM EINER IN DER VERTIKALEN ACHSE (Z) GEMESSENEN ÖRTLICHEN MATERIALVERDÜNNUNG AN UND VERGLICHEN MIT EINER AN DEN KLEBESTRECKEN (12) GEMESSENEN MATERIALDICKE RELATIV ZUR VERTIKALEN ACHSE (Z) AN.

2. ABDECKUNG (1) NACH DEM VORHERGEHENDEN ANSPRUCH, WOBEI DIE KLEBESTRECKEN (12) ALLE RELATIV ZUR QUERACHSE (Y) MITEINANDER AUSGERICHTET SIND.

3. ABDECKUNG (1) NACH EINEM DER ANSPRÜCHE 1 ODER 2, BEI DER JEDER VERFORMUNGSVORSPRUNG (13) EINE GENEIGTE KLAPPE (131) AUFWEIST, DIE SICH VON EINEM QUERENDEN ENDE (122) JEDER KLEBESTRECKE (12) ERSTRECKT, DIE DEN VORSPRUNG QUER UMGIBT, UND SICH ZU EINEM FALTBEREICH (130) DES VERFORMUNGSVORSPRUNGS (13) ERSTRECKT.

4. ABDECKUNG (1) NACH DEM VORHERGEHENDEN ANSPRUCH, BEI DER DER FALTBEREICH (130) JEDES DEFORMATIONSANSATZES (13) EINE FLACHE ABDECKUNG (132) AUFWEIST, DIE SICH ZWISCHEN JEDER GENEIGTEN KLAPPE (131) ERSTRECKT UND DEN DEFORMATIONSANSATZ (13) IN QUERRICHTUNG UMGIBT.

5. ABDECKUNG (1) NACH DEM VORHERGEHENDEN ANSPRUCH, BEI DER IN BEZUG AUF DIE QUERACHSE (Y) DIE ABFLACHUNG (132) DURCH GERADLINIGE RÄNDER (133) BEGRENZT IST, DIE SICH JEWEILS PARALLEL ZUR LÄNGSACHSE (X) ERSTRECKEN, WOBEI JEDER GERADLINIGE RAND (133) EINEN FALTVORLAUF DES FALTBEREICHS (130) BILDET.

6. ABDECKUNG (1) NACH DEM VORHERGEHENDEN ANSPRUCH, WOBEI DIE GERADEN KANTEN (133) DER ABFLACHUNG (132) JEDES FALTBEREICHS (130) PARALLEL ZUEINANDER SIND.

7. ABDECKUNG (1) NACH EINEM DER ANSPRÜCHE 4 BIS 6, WOBEI DIE ABFLACHUNG (132) JEDES FALTBEREICHS (130) PARALLEL ZUR OBEREN AUFLAGEFLÄCHE (121) IST.

8. ABDECKUNG (1) NACH DEM VORHERGEHENDEN ANSPRUCH, WOBEI EIN ABSTAND ZWISCHEN DER ABFLACHUNG (132) UND DER OBEREN AUFLAGEFLÄCHE (121) RELATIV ZUR VERTIKALEN ACHSE (Z) ZWISCHEN 10 MM UND 20 MM, VORZUGSWEISE GLEICH 15 MM, BETRÄGT.

9. KRAFTFAHRZEUG (2) MIT EINEM MOTORRAUM, DER MIT EINER HAUBENANORDNUNG (30) (3) BEDECKT IST, DIE EINE HAUBENAUSKLEIDUNG (1) NACH EINEM DER VORHERGEHENDEN ANSPRÜCHE UND EINE MIT DER HAUBENAUSKLEIDUNG (1) FEST VERBUNDENE HAUBE (30) AUFWEIST, UND ZWAR ZUMINDEST DURCH EINE VERKLEBUNG DER HAUBE (30) MIT DEN VERKLEBUNGSBAHNEN (12) DER HAUBENAUSKLEIDUNG (1).

## Claims

1. HOOD LINING (1) FOR A MOTOR VEHICLE (2), THE HOOD LINING (1) COMPRISING A REAR ZONE (11) FOR FIXING A HOOD (30) TO THE HOOD LINING (1), THE REAR ZONE (11) COMPRISING AT LEAST TWO TRACKS (12) FOR BONDING THE HOOD (30) TO THE HOOD LINING (1), EACH AT LEAST ONE BONDING TRACK (12) FORMING A BEAM EXTENDING ALONG A TRANSVERSE AXIS (Y) OF THE COVER LINING (1) AND HAVING AN UPPER BEARING FACE (121) AGAINST THE COVER (30), **CHARACTERISED IN THAT** THE REAR ZONE (11) COMPRISES AT LEAST ONE DEFORMATION INITIATOR (13), EACH DEFORMATION INITIATOR (13) BEING HOUSED BETWEEN TWO ADJACENT ADHESIVE TRACKS (12), RELATIVE TO THE TRANSVERSE AXIS (Y), EACH DEFORMATION INITIATOR (13) HAVING A GREATER FLEXIBILITY THAN THAT OF THE ADHESIVE TRACKS (12) WITH RESPECT TO A COMPRESSIVE FORCE ORIENTATED ALONG A VERTICAL AXIS (Z) OF THE COVER LINING (1), EACH DEFORMATION INITIATOR (13) TAKING THE FORM OF A LOCAL THINNING OF MATERIAL, MEASURED ALONG THE VERTICAL AXIS (Z) AND COMPARED WITH A MATERIAL THICKNESS MEASURED ON THE LEVEL OF THE BONDING TRACKS (12), RELATIVE TO THE VERTICAL AXIS (Z).

2. CAP LINING (1) ACCORDING TO THE PRECEDING CLAIM, IN WHICH THE BONDING TRACKS (12) ARE ALL ALIGNED WITH EACH OTHER, RELATIVE TO THE TRANSVERSE AXIS (Y).

3. CAP LINING (1) ACCORDING TO ANY ONE OF CLAIMS 1 OR 2, IN WHICH EACH DEFORMATION PRIMER (13) COMPRISES AN INCLINED FLAP (131) EXTENDING FROM A TRANSVERSE TERMINATION (122) OF EACH BONDING TRACK (12) SURROUNDING SAID PRIMER TRANSVERSELY AND AT THE MANAGEMENT OF A FOLDING ZONE (130) OF THE DEFORMATION PRIMER (13).

4. BONNET LINING (1) ACCORDING TO THE PRECEDING CLAIM, IN WHICH THE FOLDING ZONE (130) OF EACH DEFORMATION PRIMER (13) COMPRISES A FLAT (132) EXTENDING BETWEEN EACH INCLINED FLAP (131) SURROUNDING TRANSVERSELY SAID DEFORMATION PRIMER (13).

5. CAP LINING (1) ACCORDING TO THE PRECEDING CLAIM, IN WHICH, RELATIVE TO THE TRANSVERSE AXIS (Y), THE FLAT (132) IS DELIMITED BY RECTILINEAR EDGES (133) WHICH EACH EXTEND PARALLEL TO THE LONGITUDINAL AXIS (X), EACH RECTILINEAR EDGE (133) FORMING A PRIMER FOR FOLDING THE FOLDING ZONE (130).

6. CAP LINING (1) ACCORDING TO THE PRECEDING CLAIM, IN WHICH THE RECTILINEAR EDGES (133) OF THE FLAT (132) OF EACH FOLDING ZONE (130) ARE PARALLEL TO EACH OTHER.

7. CAP LINING (1) ACCORDING TO ANY ONE OF CLAIMS 4 TO 6, IN WHICH THE FLAT (132) OF EACH FOLDING ZONE (130) IS PARALLEL TO THE UPPER BEARING FACE (121).

8. HOOD LINING (1) ACCORDING TO THE PRECEDING CLAIM, IN WHICH A DISTANCE BETWEEN THE FLAT (132) AND THE UPPER BEARING FACE (121) IS, RELATIVE TO THE VERTICAL AXIS (Z), BETWEEN 10 MM AND 20 MM, PREFERABLY EQUAL TO 15 MM.

9. MOTOR VEHICLE (2) COMPRISING AN ENGINE COMPARTMENT COVERED WITH A COWL ASSEMBLY (30) (3) COMPRISING A COWL LINER (1) ACCORDING TO ANY ONE OF THE PRECEDING CLAIMS AND A COWL (30) INTEGRAL WITH THE COWL LINER (1) AT LEAST THROUGH AN ADHESIVE BONDING OF SAID COWL (30) ON THE ADHESIVE TRACKS (12) OF SAID COWL LINER (1).
